Europäisches Patentamt

European Patent Office

Office européen des brevets

(19)

(11) Veröffentlichungsnummer : **0 128 378**
**B1**

(12) **EUROPÄISCHE PATENTSCHRIFT**

(45) Veröffentlichungstag der Patentschrift :
15.04.87

(21) Anmeldenummer : 84105404.2

(22) Anmeldetag : 12.05.84

(51) Int. Cl.⁴ : **B 65 G 23/22**, B 65 G 23/00

(54) Fördereinrichtung zur stetigen Förderung.

(30) Priorität : 16.05.83 DE 3317745

(43) Veröffentlichungstag der Anmeldung :
19.12.84 Patentblatt 84/51

(45) Bekanntmachung des Hinweises auf die Patenterteilung : 15.04.87 Patentblatt 87/16

(84) Benannte Vertragsstaaten :
AT BE CH DE FR GB IT LI LU NL SE

(56) Entgegenhaltungen :
AT-B- 319 138
DE-A- 909 908
DE-B- 1 026 221
DE-B- 2 624 162
US-A- 3 892 307

(73) Patentinhaber : Schröder Maschinenhandels- GmbH
& Co KG
Hauptstrasse 11
D-3579 Frielenhof (DE)

(72) Erfinder : Schröder, Marianne
Hauptstrasse 11
D-3579 Frielendorf (DE)

(74) Vertreter : Jahn-Held, Wilhelm W. Dr.Dr.-Ing. Dipl.-
Chem.
Schöne Aussicht 8
D-3513 Staufenberg-Landwehrhagen (DE)

EP 0 128 378 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Fördereinrichtungen zur stetigen Förderung werden für zahlreiche Schüttgüter und verpackte Güter in vielen Gewerbe- und Industrie-Betrieben, in der Produktion und im Handel und zur Betriebsrationalisierung eingesetzt.

Nach dem Stand der Technik sind bisher Trommelmotore, Antriebe über Keilriemen auf Getriebe oder Flachgetriebe, Aufsteckgetriebemotore und besonders für schwere Antriebe Stirnradgetriebe bzw. Motore mit Kegelstirnradgetrieben bekannt. Derartige Antriebe sind schwer und vergrössern die Konstruktion, da diese mehr Raum erfordern, und es sind ausserdem mehr Massnahmen und Aufwendungen für die Befestigung erforderlich. Es ist auch der Aufwand für die Wartung und für den Ersatz dieser Antriebe notwendig.

Um den technisch-physikalisch erwünschten « gezogenen » Antrieb zu ermöglichen, befinden sich die Antriebe in den meisten Fällen am vorderen Ende der Förderbänder. Es entstehen dadurch weitere Schwierigkeiten, wenn der vordere Teil der Förderbänder auf Stützen gelegt, oder aufgehängt oder freitragend ausgebildet wird, wie dies bei vielen Förderbändern erfolgt.

Antriebs- und Umlenkrollen für Förderbänder werden bisher ballig gedreht, damit der Fördergut in der Mitte läuft. Durch das Balligdrehen wird viel Material verbraucht, und es sind erhebliche Lohnstunden auf Werkzeugmaschinen erforderlich.

Diese technischen und wirtschaftlichen Nachteile werden durch die Fördereinrichtung der Erfindung vermieden.

Die DE-B-1 026 221 beschreibt einen Eintrommelantrieb für Förderbänder, bei dem das Getriebe mit einer Hohlwelle für die Trommelachse versehen ist und bei dem der zwischen die Bandtrume ragende Motor am Getriebegehäuse angeflanscht ist und die Motorwelle in eine Hohlwelle eingesteckt ist.

Dieser Stand der Technik betrifft einen Antrieb, der von aussen auf die Trommelachse (Welle) der Antriebstrommel wirkt. Dieser Stand der Technik erfordert viele mechanische Teile und grosse Untersetzungen. Dieser hat keine Anregung für die konstruktive Ausbildung der Erfindung gegeben.

Die deutsche Patentschrift 909 908 beschreibt einen Antrieb entsprechend dem Oberbegriff des Anspruchs 1, insbesondere für Förderbänder. Dieser Antrieb verwendet einen ortsfesten Motor, der über einen Kettenantrieb einen ebenfalls ortsfesten, rotierenden Mitnehmer antreibt, wobei als zusätzliche Belastung ein an dem gezogenen Trum des Kettentriebes beweglich angebrachtes Spannmittel dient. Derartige, aussenliegende Antriebe über Ketten werden bei der Fördereinrichtung der Erfindung nicht verwendet.

Es ist die Aufgabe der Erfindung, Fördereinrichtungen zur stetigen Förderung von transportfähigen Gütern aller Art zu schaffen, die konstruktiv einfach und in ihrem Einsatz sicher sind.

Die Aufgabe der Erfindung ist in dem Oberbegriff des Patentanspruches 1 definiert (bekannt aus DE-C-909 908). Die Lösung der Aufgabe der Erfindung ergibt sich aus dem kennzeichnenden Teil des Patentanspruches 1. Die Fördereinrichtung der Erfindung besteht aus der zylindrischen Antriebstrommel auf einer Welle mit Antriebsriemen als Antriebsorgan der Motorriemenscheibe des Antriebsmotors, gegebenenfalls mit einer Spannrolle und aus dem Fördergurt, die von Rollenstationen getragen werden, und aus einer schwebenden Welle, wobei als Antriebsriemen ein oder mehrere Riemen, wie Flachriemen, Seile, Keilriemen, oder Zahnriemen, oder Zahnräder die Antriebstrommel mittelbar oder unmittelbar antreiben, und die Antriebsriemen unter dem Fördergurt angeordnet sind, oder nur teilweise auf einen, über den Fördergurt hinausragenden Teil und teilweise auf einen unterhalb des Fördergurtes liegenden Teiles der Antriebstrommel wirken, und wobei die Motorriemenscheibe einen kleineren Durchmesser als der Durchmesser der Antriebstrommel aufweist, vorzugsweise mit dem Verhältnis Durchmesser der Motorriemenscheibe zum Durchmesser der Antriebstrommel wie 1 : bis etwa 10-20, und die schwebende Welle mit Antriebsriemen ausgebildet ist, und gegebenenfalls die schwebende Welle durch eine verlängerte Motorenriemenscheibe mit zwei Flachriemen angetrieben wird und von der Mitte der schwebenden Welle mit dem Antriebsriemen die Antriebstrommel angetrieben wird. Die weitere Ausgestaltung der Fördereinrichtung der Erfindung ergibt sich aus den Unteransprüchen.

Die bevorzugte, alternative Ausgestaltung der Fördereinrichtung der Erfindung mit dem Verfahren zu seiner Durchführung gestattet durch ihre Variationsbreite die Verwendung für die unterschiedlichsten Anforderungen der Praxis bei der stetigen Förderung kleiner Volumen von Spezialprodukten, wie der pharmazeutischen oder der Nahrungsmittel-Industrie ; aber auch den Transport von Massengütern, wie Düngemittel in loser Schüttung als Haufwerk oder in Sackverpackung oder von losen Rohstoffen, wie Rohphosphate oder Braunkohle im Tagebau. Diese Variationsbreite der Fördereinrichtung der Erfindung bietet auch die Möglichkeit, die Länge der Fördergurte aus den unterschiedlichsten Materialien von den geringsten Abmessungen bis auf grosse Längen auszudehen, wie diese in der Praxis benötigt werden.

Es betreffen die Figuren folgende Darstellungen :

Figur 1 Antrieb einer Antriebstrommel mittels Flachriemen, wobei dieser von dem Förderband überdeckt wird,

Figur 2 Seitenansicht des Antriebes gemäss Figur 1,

Figur 3 Antrieb einer Antriebstrommel mit einer Untersetzung mittels einer schwebenden Welle,

Figur 4  Seitenansicht von der schwebenden Welle bis zum Motor in Figur 3,

Figur 5a  Antrieb durch Keilriemen statt durch Flachriemen mit gemeinsamer Deckplatte,

Figur 5b  Seitenansicht der Anordnung gemäss Figur 5a,

Figur 6  Antrieb durch nebeneinander gelegte Keilriemen,

Figur 7  Antrieb einer Antriebstrommel mit einer Untersetzung durch eine schwebende Welle, wobei zwei Antriebsriemen von der Motorriemenscheibe zur schwebenden Welle und nur ein Antriebsriemen zur Antriebstrommel gehen,

Figur 8  Antriebstrommel mit eingewalzten Rillen, Stützringen, Stützscheiben,

Figur 9  zylindrische Antriebstrommel ohne Rillen mit Keilriemen auf der zylindrischen Oberfläche der Antriebstrommel unterhalb des Förderbandes,

Figur 10  Antrieb mit Knickrolle auf dem Riemen,

Figur 11  Antrieb vom Motor zur Antriebsrolle und von dieser Antrieb der Antriebstrommel,

Figur 12  Seitenansicht des Antriebes gemäss Figur 11,

Figur 13  Antriebsriemen vom Motor zur Antriebsrolle mit Antrieb in der Mitte,

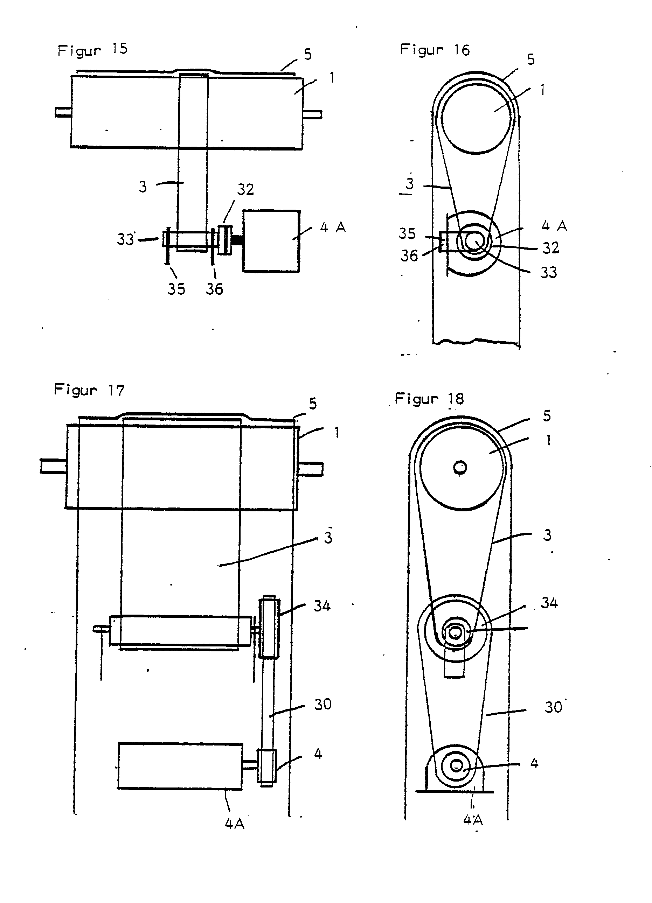

Figur 14  Seitenansicht des Mittenantriebes gemäss Figur 3,

Figur 15  Antrieb der Antriebsrolle über eine Kupplung durch den Motor,

Figur 16  Seitenansicht des Antriebs gemäss Figur 15,

Figur 17  Antrieb vom Motor zur grösseren Antriebsscheibe der Antriebsrolle und Verwendung eines breiten Antriebsriemens von der Antriebsrolle zur Antriebstrommel,

Figur 18  Seitenansicht gemäss Figur 17,

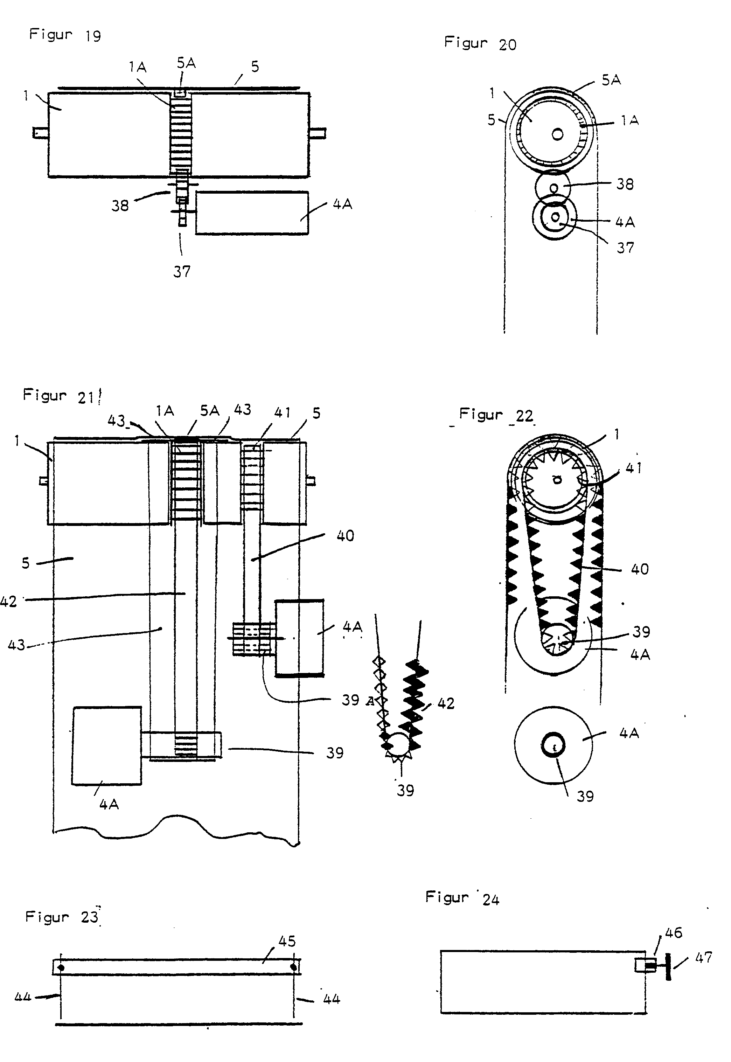

Figur 19  Antrieb der Antriebstrommel durch Zahnrad und Zahnkranz,

Figur 20  Seitenansicht gemäss Figur 19,

Figur 21  Antrieb der Antriebstrommel durch Zahnriemen und Antrieb des Fördergurtes mit Zähnen durch die Antriebstrommel und mit einem zweiten Zahnkranz zum schlupffreien Antrieb,

Figur 22  Seitenansicht gemäss Figur 21,

Figur 23  Seitenwände und Höhenbegrenzung zur Querschnittsbestimmung des Fördergutes,

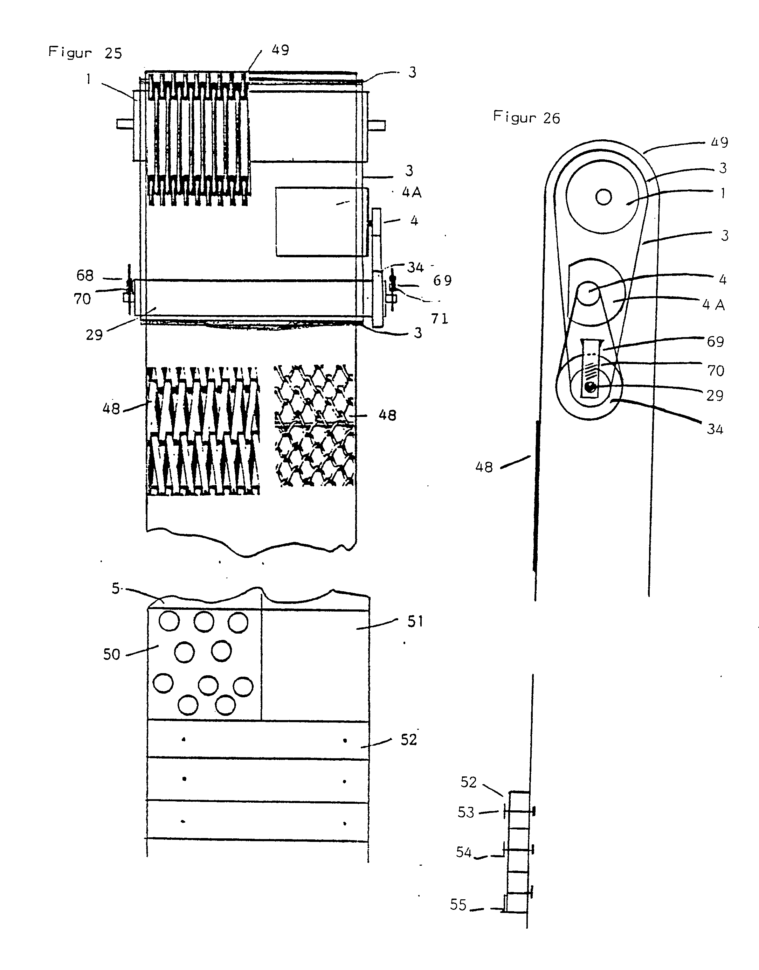

Figur 24  Seitenansicht gemäss Figur 23,

Figur 25  Fördergurt oder gleichwertiges Förderelement, Drahtgurt mit Ausführungen und mit aufgelegten Stahlgliedern, Stahlprofilen, seitlicher Antrieb und Stahlband als gleichwertiges Förderelement mit und ohne Lochungen,

Figur 26  Seitenansicht gemäss Figur 25,

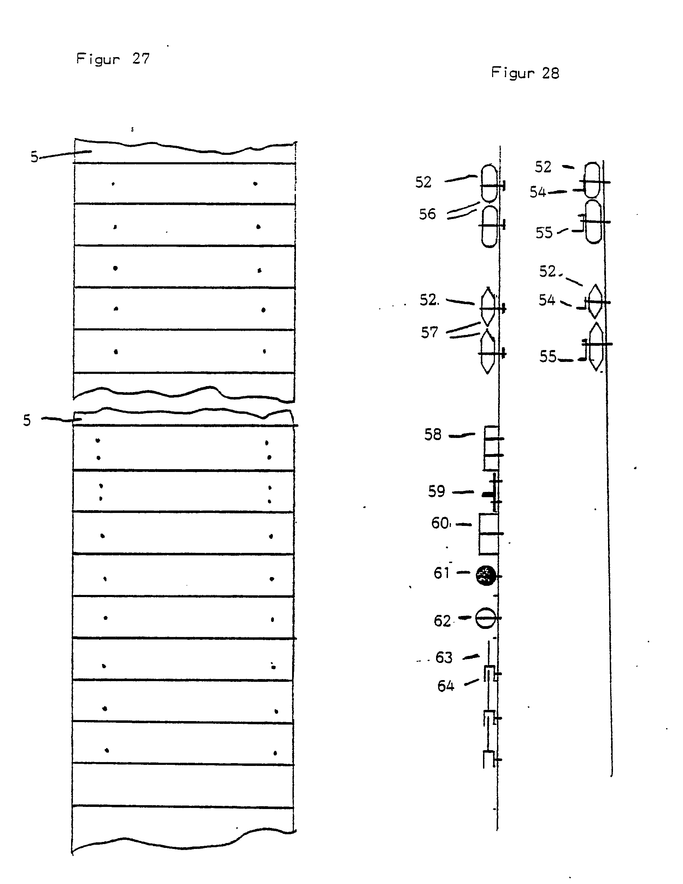

Figur 27  Fördergurte oder gleichwertiges Förderelement mit Platten, Profilen und Laschenprofilen,

Figur 28  Seitenansicht gemäss Figur 27.

Zur Erläuterung der Figuren wird beschrieben : Die Antriebstrommel (1) auf der Welle (2) wird durch den Flachriemen (3) angetrieben. Die in vielen Fällen grossen Durchmesser der Antriebstrommel (1) und die kleineren Durchmesser der Motorriemenscheibe (4) gestatten einen direkten Antrieb durch den Motor ohne Zwischenschaltung eines Getriebes. Der Flachriemen (3) vergrössert in seiner Breite den Durchmesser der Antriebstrommel (1) und erfüllt damit den gleichen technischen Effekt wie die zweckmässige Balligkeit der Antriebstrommel (1). Der Fördergurt (5) hat dadurch die für den geraden Lauf notwendige Mittenerhöhung. Diese kann beispielsweise je nach den technischen Anforderungen schmal bis breit, wie von 100 bis 1 000 mm Breite und von dünn bis dick, wie von 4 bis 30 mm gewählt werden.

Der Antriebsriemen (3) liegt auf der Antriebstrommel (1) auf einer grösseren Länge (m) auf als der Fördergurt (5) in Abhängigkeit von dem Durchmesser der Motorriemenscheibe (4) und von dem Abstand der Motorriemenscheibe (4) von der Antriebstrommel (1).

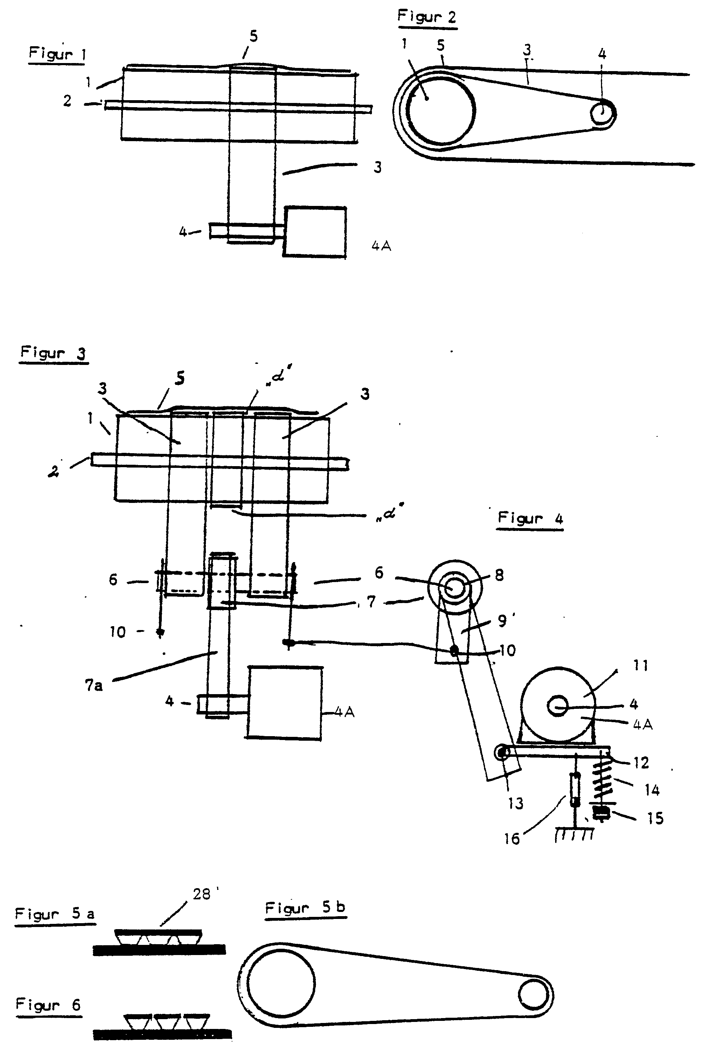

Diese Länge der Auflage kann auch als Umschlingungswinkel $\alpha$ des Flachriemens (3) ausgedrückt werden, der grösser ist als der Umschlingungswinkel $\alpha$ des Fördergurtes (5) an der Antriebstrommel (1) (Figur 1 und 2).

Mit « d » wird eine Durchmesservergrösserung bezeichnet, die beispielsweise aus Gummi oder aus Kunststoff besteht, und die aufgezogen, geklebt oder vulkanisiert ist auf der Antriebstrommel (1). Diese Vergrösserung des Durchmessers « d » kann auch aus einem Metallring beispielsweise bestehen, der aufgeschraubt, aufgeschweisst, oder mit Stellschrauben arretiert ist, die jedoch nicht über die Vergrösserung des Durchmessers « d » hinausragen.

Die Flachriemen (3) verdoppeln die Breite des Systems Antriebsriemen-Flachriemen und diese bringen zusammen mit der Vergrösserung des Durchmessers « d » eine Verbreiterung der Mittenerhöhung, als der Balligkeit. Der Fördergurt (5) liegt nur noch auf den beiden Seiten der Antriebstrommel (1) in schmalen Streifen auf (Figur 3). Die schwebende Welle (6) treibt mit beiden Seiten die Flachriemen (3). Das Rad (7) in der Mitte der schwebenden Welle (6) wird von der Motorriemenscheibe (4) über den Flachriemen (7A) angetrieben ; es ist beispielsweise auch eine doppelte Untersetzung verwendbar. Wenn insbesondere bei stark schwingenden Förderbändern eine Sicherung der schwebenden Welle (6) notwendig ist, sichern die Halterungen (9) mit den Löchern (8) und mit den Befestigungen (10) die schwebende Well (6) für den Fall, dass ein Flachriemen reisst oder abfällt.

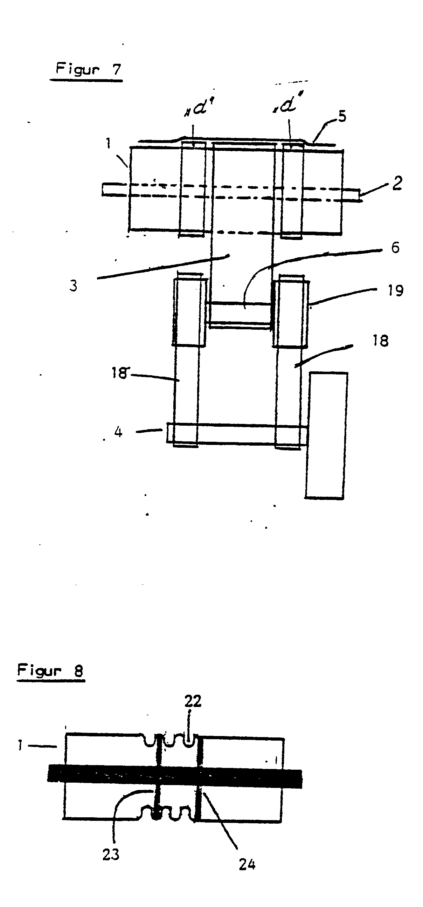

Der Motor (11) mit der Motorriemenscheibe (4) ist beispielsweise auf einer Platte (12) mit der Achse (13) schwenkbar so gelagert, dass dieser die Flachriemen (3) in ihrer Arbeitsspannung hält. Durch die Federn (14), Schrauben (15) oder Zylinder mit Gas und Kolben (16) wird die Lage des Motors (11) und damit die Spannung der Flachriemen (3) den technischen Anforderungen hinsichtlich der Verstellbarkeit angepasst. Es können die Befestigungen (10) der Halterungen (9) und die Achse (13) derart vereinigt werden, dass die Befestigungen (10) entfällt, da die Achse (13) diese Funktion mit übernimmt (Figur 4). Sofern mehr als ein Keilriemen verwendet wird, können diese Antriebsteile vorzugsweise als ein Paket nebeneinander laufen und einen Flachriemen als Deckplatte aufweisen (Figur 5A). Es können beispielsweise zwei Vergrösserungen der Durchmesser « d » angeordnet werden, um die Symmetrie der Balligkeit zu erhalten. Die schwebende Welle (6) ist im Bereich des kleineren Durchmessers (20) breiter ausgeführt, um grössere Kräfte übertragen zu können. Die verlängerte Motorriemenscheibe trägt die Ziffer (17) (Figur 7).

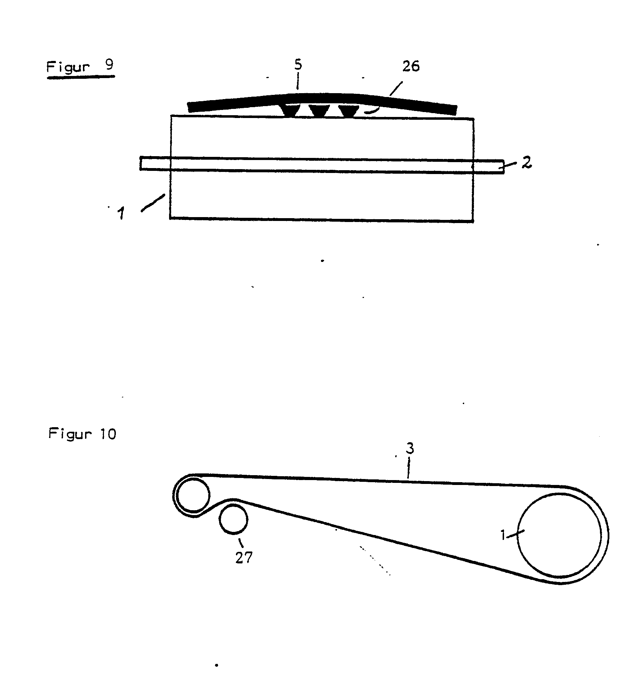

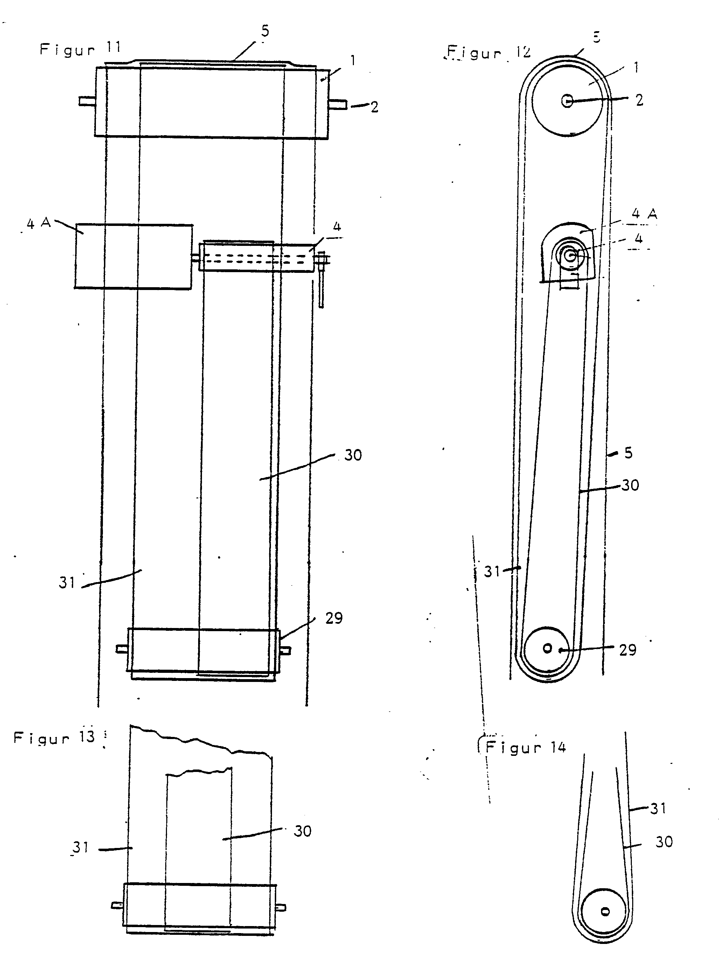

Die Antriebstrommel (1) weist auch eine oder mehrere eingewalzte Rillen auf. Das Einwalzen der Rillen kann in bekannter Weise wie durch Sicken erfolgen. Die Stützscheibe trägt die Ziffer (23) und der Stützring die Ziffer (24) (Figur 8). Auf der zylindrischen Antriebstrommel (1) laufen auch die Keilriemen (26), die auf der Oberfläche eine lange Auflagefläche aufweisen, und die durch den Anpressdruck des Fördergurtes (5) beaufschlagt werden. Diese Form der Kraftübertragung ist in vielen Anwendungsbereichen ausreichend, sodass auf der Antriebstrommel (1) keine Rillen erforderlich sind. Bei der kleineren Motorriemenscheibe (4) kommen die Vorteile der grösseren Kraftübertragung durch die Keilriemen zur Wirkung (Figur 10). Eine als Gegenrolle wirkende Spannrolle trägt die Ziffer (27) und dient dazu, einen grösseren Umschlingungswinkel zu erreichen (Figur 11). Die Fördereinrichtung der Erfindung gestattet auch die Verwendung des gesamten Antriebes am (hinteren) Endes. Bei dieser alternativen Verwendung wird die Antriebstrommel (1) zur Umlenktrommel und soll deshalb entsprechend dem technischen Effekt des gezogenen Antriebes langsamer laufen als die Antriebstrommel (1), um den technischen Effekt des gezogenen Antriebes zu erhalten.

Die Steuerung des Elektromotors der Umlenktrommel kann in bekannter Weise durch Thyristoren erfolgen. Es können auch beide Elektromotore elektrisch so aufeinander abgestimmt und gesteuert werden, dass die Umlenktrommel die erforderliche Nacheilung hat. Es können die Förderbänder beispielsweise durch Umpolung der Motore reversierbar ausgebildet werden.

Die Fördereinrichtung der Erfindung betrifft weiter, dass der Fördergurt (5) in einem Trog auf einer Luftschicht gleitet, die durch Düsen eingedrückt wird und dadurch Rollen und Tragstationen auf der Förderstrecke entfallen. Es wird durch diese konstruktive Ausbildung der Fördereinrichtung der Erfindung auch ein etwaiges Durchhängen des Fördergurtes (5) verhindert.

Die Fördereinrichtung der Erfindung soll vorzugsweise zur Einstellung der Austrittsöffnung des Fördergutes in der Fläche (Querschnitt) des Fördergutes durch Fernsteuerung (46) oder durch manuelle Bedienung eines Handrades (47) veränderbar sein. Diese Änderung der Fläche (Querschnitt) ist insbesondere an Austrittsöffnungen von Behältern, Silos oder an Fahrzeugen angebracht. Sofern mit der Fördereinrichtung der Erfindung kleinstückige Produkte gefördert werden, können beim Lauf der Platten (52) um die Antriebstrommel (1) kleine Teilchen zwischen die Platten (52) gelangen. Zur Verhinderung dieses Eindringens sind an den beiden Längsseiten der Platten (52) gerundete Kanten (56) oder spitze Längskanten (57) angeordnet.

In einer bevorzugten Ausführungsform der Fördereinrichtung der Erfindung werden Stahllaschenprofile (63) mit U- förmiger Mulde (64) am Ende entgegen der Förderrichtung angeordnet. Diese Profile lassen keine Teilchen der geförderten Produkte durchfallen. Es werden dadurch schädigende Kräfte zwischen den Profilen (63) und dem Fördergurt (5) vermieden. Die Zwischenräume der Stahllaschenprofile (63) können dem Fördergut, seiner Grösse und Gewicht, sowie seinen Formen, wie eng, rund, eckig, angepasst werden.

Es kann auch die Materialstärke des Stahllaschenprofils (63) in der U-förmigen Mulde, also die Enge oder Weite der Bewegungsmöglichkeit, angepasst werden. Dazu gehört auch, wie eng mit der Schraube (60), gegebenenfalls mit Zwischenscheiben (67), die Stahlprofile (63) an die Fördergurte (5) oder gleichwertige Förderelemente herangezogen werden. Die Antriebsriemen (3) sind auswechselbar und dadurch den besonderen Anforderungen der zu fördernden Güter anzupassen. Dazu gehört in der Praxis gegebenenfalls eine aggressive Umgebung, oder abrasive oder korrodierende Beimengungen oder Flüssigkeiten im Fördergut. Die Antriebsriemen (3) sind nach der Anordnung der Fördereinrichtung der Erfindung ohne besonderen Aufwand leicht auszutauschen und zu ersetzen bei Abnützung, worin ein zusätzlicher technischer Vorteil gegenüber dem Stand der Technik liegt.

Der leichten Auswechselbarkeit der Antriebsriemen (3) dient auch die Anordnung des Antriebes.

Die Ausbildung des Antriebsriemens (3) in besonders dicker, elastischer Form mit haltbarer und adhäsiver Oberfläche gestattet den Einsatz des Fördergurtes (5) oder gleichwertiger Förderelemente als tragendes Förderelement für Stahlleisten (58), Stahlprofile (59), Stahlhohlprofile (60) auch in runder, voller (61) oder hohler (62) Ausführung.

Der Motor (4A) treibt über Kette, Keilriemen, oder Zahnriemen (30) die Scheibe (34) und damit die gelagerte Welle (29) an. Die gelagerte Welle (29) ist in Stahlprofilen (68, 69) verschiebbar gelagert. Schraubspindeln (70, 71) mit Innengewinde gestatten das Spannen und das Lockern der gelagerten Welle (29). Sobald die (hintere) Spannstation des Fördergurtes (5) oder gleichwertiger Förderelemente gelockert ist durch das Lösen der Stellschrauben oder Spindeln, kann der Antriebsriemen (3) entfernt und ein anderer Antriebsriemen (3) aufgelegt werden.

Durch die Anordnung des gezogenen Antriebes mit der Fördereinrichtung der Erfindung und mit der Anordnung des nacheilenden Antriebes an der entgegengesetzten Seite der Fördereinrichtung werden alle Teile auch bei langen. Fördereinrichtungen, wie ab etwa 200 m Länge, entlastet. Diese Entlastung ist auch bei grossen Förderleistungen und bei etwaiger Stossbelastung ein erheblicher Vorteil für die Fördereinrichtung gemäss der Erfindung.

Bei der Fördereinrichtung der Erfindung sind die Antriebe insbesondere reversierbar. Für den auch in diesem Fall aufrecht zu erhaltenden, gezogenen Antrieb werden die Übersetzungen geändert, oder es werden die elektrischen oder elektronischen Steuerungen umgekehrt wirkend geschaltet.

Die beidseitige Anordnung des Antriebes bezeichnet also den Antrieb an der Antriebstrommel (1) und an der Umlenkstation am hinteren Ende der Fördereinrichtung.

Unter dem Begriff « reversierbar » versteht der Stand der Technik die Umkehrung der Förderrichtung, also das Rückwärtslaufen.

**Patentansprüche**

1. Fördereinrichtung zur stetigen Förderung unter Verwendung eines Eintrommelantriebes mit zylindrischer Antriebstrommel (1), Welle (2), Antriebsorgan (3) und Fördergurt (5), gegebenenfalls mit einer Spannrolle (27), gekennzeichnet durch die als Gegenrolle ausgebildete Spannrolle (27), gegebenenfalls eine schwebende Welle (6), wobei als Antriebsorgan (3) ein oder mehrere Riemen, wie Flachriemen, Seile, Keilriemen, oder Zahnriemen, oder Zahnräder die Antriebstrommel (1) über die schwebende Welle (6) oder direkt antreiben, und die Antriebsriemen (3) unter dem Fördergurt (5) angeordnet sind, oder nur teilweise auf einen, über den Fördergurt (5) hinausragenden Teil und teilweise auf einen unterhalb des Fördergurtes (5) liegenden Teiles des Trommel (1) wirken, und wobei die Motorriemenscheibe (4) einen kleineren Durchmesser als der Durchmesser der Antriebstrommel (1) aufweist, vorzugsweise mit dem Verhältnis Durchmesser der Motorriemenscheibe (4) zum Durchmesser der Antriebstrommel (1) wie 1 : bis etwa 10-20, und gegebenenfalls die schwebende Welle (6) durch eine verlängerte Motorenriemenscheibe (4) mit zwei Flachriemen (18) angetrieben wird und von der Mitte der schwebenden Welle (6) mit dem Antriebsriemen (3) die Antriebstrommel (1) angetrieben wird.

2. Fördereinrichtung nach Anspruch 1, dadurch gekennzeichnet, dass der Antriebsriemen (3) auf der Antriebstrommel (1) auf einer grösseren Umschlingungslänge auf der Antriebstrommel (1) aufliegt als der Fördergurt (5) in Abhängigkeit von dem Durchmesser der Motorriemenscheibe (4) und von dem Abstand der Motorriemenscheibe (4) von der Antriebstrommel (1).

3. Fördereinrichtung nach den Ansprüchen 1 und 2, dadurch gekennzeichnet, dass die Balligkeit der Antriebstrommel (1) bei Anordnung von einem oder mehreren Antriebsriemen (3) durch Auflagen aus natürlichem oder synthetischem Material, wie aus Gummi, Kunststoff, oder aus Metall, zwischen oder seitlich der Antriebsriemen (3), durch ebene oder gewölbte Bandagen « d » zur Vergrösserung des Durchmessers erhöht wird, oder die Balligkeit durch eine Wölbung symmetrisch zur Mitte der Antriebstrommel (1) auf einer solchen Breite erhöht wird, dass der Mittenlauf des Fördergurtes (5) verstärkt wird, und gegebenenfalls der Antriebsriemen (3) seinerseits zur Mitte hin gewölbt ausgebildet ist.

4. Fördereinrichtung nach einem oder mehreren der Patentansprüche 1 bis 3, dadurch gekennzeichnet, dass auf der Antriebstrommel (1) zur Erhöhung der Balligkeit Antriebskeilriemen (28) als Einheit mit geschlossener Oberfläche ausgebildet sind, und dass die Antriebstrommel (1) in der Mitte eine oder mehrere, eingewalzte oder eingefrässte Rillen zur Aufnahme von Keilriemen aufweist, vorzugsweise mit einer solchen Tiefe, dass die Keilriemen über den zylindrischen Durchmesser der Antriebstrommel (1) hinausragen zur Bewirkung des Mittenlaufes des Fördergurtes (5), und in der Antriebstrommel (1) ein oder mehrere Stützringen oder Stützscheiben angeordnet sind, derart, dass sich neben diesen die Rillen (22) befinden und dass der Antriebsmotor (4 A) schwenkbar gelagert ist.

5. Fördereinrichtung nach einem oder mehreren der Patentansprüche 1 bis 4, dadurch gekennzeichnet, dass der Motor (4 A) mit der Motorriemenscheibe (4) über eine Trommel (29) die Antriebstrommel (1) antreibt zur Übertragung grösserer Antriebskräfte durch grössere Untersetzungen durch Veränderung der Durchmesser der Motorriemenscheibe (4) und der Trommel (29), wobei zur Übertragung der Antriebskräfte Riemen (30, 31) zwischen Motorriemenscheibe (4) und Trommel (29), sowie zwischen Trommel (29) und Antriebstrommel (1) angeordnet sind, insbesondere mit mittiger Anordnung des Riemens (30) zur Bewirkung des Mittenlaufes des Riemens (31) und zum Mittenlauf des Fördergurtes (5) oder eines gleichwertigen Förderelementes und gegebenenfalls der Riemen (30) mit Motorriemenscheibe (4) und Scheibe (34) seitlich angeordnet sind, und dass die Antriebsrolle (33) anstelle der Motorriemenscheibe (4) mit zwei oder mehrfacher Lagerung (35, 36) mit der Kupplung (32) verbunden ist.

6. Fördereinrichtung nach einem oder mehreren der Patentansprüche 1 bis 5, dadurch gekennzeichnet, dass der Fördergurt (5) mit Verzahnungen (5 A) ausgerüstet ist, und die Antriebstrommel (1) Verzahnungen (1 A) trägt, und der Antrieb von dem Motor (4 A), gegebenenfalls ein Getriebemotor, über ein oder mehrere Zahnräder (37, 38) auf die Verzahnung (5 A) der Antriebstrommel (1) wirkt, oder der Motor (4 A), gegebenenfalls ein Getriebemotor, mit Zahnrad (39) über Zahnriemen oder Kette (40) über die Verzahnung (41) auf die Antriebstrommel (1) wirkt, oder der Motor (4 A), gegebenenfalls ein Getriebemotor, mit dem Zahnrad (39 A) auf den doppelseitig mit Zähnen ausgerüsteten Zahnriemen (42) und damit auf den Zahnkranz (1 A) und damit auf die Antriebstrommel (1) und gleichzeitig auf den Fördergurt (5) durch die Verzahnung (5 A) wirkt und den Zahnriemen (42) mit den Seitenverstärkungen (43) trägt zur Verstärkung und zur besseren Verteilung der Antriebskräfte und zur Vergrösserung der Balligkeit.

7. Fördereinrichtung nach einem oder mehreren der Patentansprüche 1 bis 6, dadurch gekennzeichnet, dass oberhalb des Fördergurtes (5) die Förderfläche auf dem Fördergurt durch seitlich verstellbare Stahlleisten (44) und in der Höhe verstellbare Querleisten (45) eingestellt wird.

8. Fördereinrichtung nach einem oder mehreren der Patentansprüche 1 bis 7, dadurch gekennzeichnet, dass der Antriebsriemen (3) auf der zylindrischen Antriebstrommel (1) dick, gegebenenfalls mit Zwischenlagen, elastisch und mit adhäsiver Oberfläche und mit Wölbung zur Mitte zur Erreichung der Balligkeit ausgebildet ist und auf den Fördergurt (5), gegebenenfalls aus Stahldrahtgewebe (48) oder aus Stahlgliederbändern (49) zum Schutz der Oberfläche der Antriebstrommel (1) und der Unterseite des Fördergurtes (5) wirkt, gegebenenfalls Stahllaschenprofile am Fördergurt (5) mit U-förmiger Mulde (64) am Ende entgegen der Förderrichtung angeordnet sind, und die Stahlbänder (51), gegebenenfalls mit Lochung (50) oder Platten (52) auf Drahtgewebe (48) oder Stahlgliederbänder (49) aufgeschraubt, und gegebenenfalls mit Schrauben (53) Mitnehmerprofile (54) befestigt sind, oder Mitnehmerprofile (55) aufgeschweisst sind zur Förderung bei ansteigender Förderstrecke.

9. Fördereinrichtung nach einem oder mehreren der Ansprüche 1 bis 8, dadurch gekennzeichnet, dass die Antriebselemente aus der zylindrischen Antriebstrommel (1) auf der Welle (2), mit dem Antriebsriemen (3), mit der Motorriemenscheibe (4) und mit dem Antriebsmotor (4 A) auch oder nur an der Umlenkstation am hinteren Ende der Fördereinrichtung derart angeordnet sind, dass bei beidseitiger Anordnung der Antriebe mit zusätzlichem Antrieb am hinteren Ende der Umlenkstation eine Nacheilung zwischen 0,1 und 5 % der Fördergeschwindigkeit eingestellt ist, die einen gezogenen und gespannten Antrieb bewirkt, oder diese Antriebe der Fördereinrichtung reversierbar sind und bei dieser Anordnung der gezogene und gespannte Antrieb dadurch eingestellt ist, dass die Übersetzungen geändert sind, oder die Steuerung elektrisch oder elektronisch umgekehrt geschaltet sind.

10. Fördereinrichtung nach einem oder mehreren der Patentansprüche 1 bis 9, dadurch gekennzeichnet, dass der Fördergurt (5) in einem Trog auf einer Luftschicht gleitet, die durch Düsen eingedrückt wird, und dadurch Rollen und Tragstationen auf der Förderstrecke entfallen.

## Claims

1. Conveyor equipment for constant conveyance during the use of a one drum starter with cylindrical driving drums, shaft, driving arrangements and conveyor belt, in that way marked, that these out of the following parts of arrangements exist : Cylindrical driving drum (1) on the shaft (2) with the starter belt (3) as driving part of the engine belt disk (4) of the starter engine (4 A), if necessary with the snub pulley (27) and out of the conveyor belt (5), which from roller stations are being carried and if necessary out of the hovering shaft (6), whereby such driving belts (3) one or several belts, like flat belts, ropes, cone V-belts, or cog belts, or cog wheels the driving drum (1) direct or indirect start to propel, and the starter belts (3) are beneath the conveyor belt (5) in that way arranged, or partially only on one, above the conveyor belt (5) protruding part and partly on a lower end of the conveyor belt (5) laying parts operate, and whereby the engine belt disk (4) a smaller diameter as the diameter of the driving drum (1) shows, preferably with the ratio diameter of the engine belt disk (4) for the diameter of the driving drum (1) wie 1 : up to about 10-20, and if necessary the hovering shaft (6) with starter belt (3) is developed, and if necessary the hovering shaft (6) through an elongated engine belt disk (4) with two flat belts (18) be driven on and from the centre of the hovering shaft (6) with the starter belt (3) the driving drum (1) will be driven on.

2. Conveyor equipment according to claim 1, in that way marked, that the starter belt (3) on the driving drum (1) on a larger gripping length on the driving drum (1) lays upon, as the conveyor belt (5), as in a function of the diameter of the engine belt disk (4) and from the distance of the engine belt disk (4) from the driving drum (1).

3. Conveyor equipment according to the claims 1 and 2, in that way marked, that the bulging of the driving drum (1) by design from one or several starter belts (3) through coverings out of natural or synthetic material, like out of rubber, plastic material, or out of metal, between or lateral (from the side) of the starter belts (3) through even or arched tape/bandages « d » to the enlargement of the diameter be increased, or the bulging through an arching symmetrically towards the centre of the driving drum (1) on one of such a breadth/width be increased, that the centre run of the conveyor belt (5) will be strengthened, and if necessary the starter belt (3) on his side towards the centre is then developed in an arched way.

4. Conveyor equipment according to one or several of the patent claims 1 to 3, in that way marked, that on the driving drum (1) for increasing the bulging of the starter cone V-belts (28) as a unit with closed top surface are developed, and that the driving drum (1) in the centre one or several, milled or fraised grooves for the picking up of cone V-belts shows, preferably with such a depth, that the cone V-belts above the cylindrical diameter of the driving drum (1) protrude for the purpose of the centre run of the conveyor belt (5) and in the driving drum (1) one or several supporting rings or supporting disks are arranged, to such an extent, that besides these the grooves (22) are to be found and that the starter engine (4 A) is mounted in a sluing position.

5. Conveyor equipment according to one or several of the patent claims 1 to 4, in that way marked, that the engine (4 A) with the engine belt disk (4) above the drum (29) the driving drum (1) propels for the transfer of larger driving power through larger reduction of speed through changes of the diameter of the engine belt disk (4) and the drum (29), whereby for the transfer of the driving power belts (30, 31) between engine belt disk (4) and drum (29), as well as between drum (29) and drum (1) are arranged, especially with central arrangements of the belts (30) for the purpose of the centre run of the belt (31) and to the centre run of the conveyor belt (5) or one similar conveyor element and if necessary the belt (30) with engine belt disk (4) and disk (34) at the side are arranged, and that the starter roller (33) instead of the engine belt disk (4) with two or manifold mountings (35, 36) with the coupling (32) is connected.

6. Conveyor equipment according to one or several of the patent claims 1 to 5, in that way marked, that the conveyor belt (5) is with coggings (5 A) equipped, and the driving drum (1) coggings (1 A) carries, and the drive from the engine (4 A), if necessary a geared engine, above one or several cog wheels (37, 38) on the coggings (5 A) of the driving drum (1) operates, or the engine (4 A), if necessary a geared engine, with cog wheel (39) above toothed belts or chains (40) above the coggings (41) on to the driving drum (1) operates, or the engine (4 A), if necessary a geared engine, with the cog wheel (39 A) on to the double sided with teeth equipped tooth belts (42) and then on to the toothed rim (1 A) and then on to the driving drum (1) and at the same time on to the conveyor belt (5) through the coggings (5 A) operates and the toothed belt (42) with the side reinforcements (43) carries for the strengthening and to the better distribution of the driving power and to the enlargement of the bulging.

7. Conveyor equipment according to one or several of the patent claims 1 to 6, in that way marked, that at the upper part of the conveyor belt (5) the conveyor surface on the conveyor belt through lateral adjustable steel cleats (44) and in height adjustable cross cleats (45) be positioned.

8. Conveyor equipment according to one or several of the patent claims 1 to 7, in that way marked, that the driving belt (3) on the cylindrical driving drum (1) thick, if necessary with intermediate layers, elastic and with an adhesive top surface and is developed with an arching towards the centre in order to obtain the bulging and on the conveyor belt (5), if necessary out of steel wire mesh (48) or out of steel-link-tapes (49) for the protection of the top surface of the driving drum (1) and the underside of the conveyor belt (5) operates, if necessary with steel fishplate sections on the conveyor belt (5) with U-shaped trough (64) are arranged at the end towards the direction of the conveyor, and the steel tapes (51), if necessary with perforation (50) or plates (52) on wire mesh (48) or steel-link-tapes/strips (49) screwed on, and if necessary with screws (53) cam stud sections (55) are welded on for the conveyance by an ascending conveyor route.

9. Conveyor equipment according to one or several of the claims 1 to 8, in that way marked, that the starter elements out of the cylindrical driving drum (1) on the shaft (2) with the driving belt (3), with the engine belt disk (4) and with the driving engine (4 A) also or only on the turning round station at the back end of the conveyor equipment are in that way arranged, that with the arrangements on both sides of the drives with an additional drive at the back end of the turn round station a lagging phase between 0,1 and 5 per cent of the conveyor speed is fixed, which a pulled and tense drive cause, or these drives of the conveyor equipment are reversible and with this arrangement of the pulled and tense drive is by this means fixed, so that the speed transmissions are changed, or that the steering electric or electronic can be switched in a reciprocal manner.

10. Conveyor equipment according to one or several of the patent claims 1 to 9, in that way marked, that the conveyor belt (5) in a kind of trough on an air cushion glides, which by means of a nozzle will be pressed in, and by this means rollers and carry stations fall out on the conveyor route.

**Revendications**

1. Installation de transport pour le transport continu en utilisant une commande à un tambour avec un tambour moteur cylindrique, arbre, organe de commande et courroie transporteuse, caractérisée en ce que celle-ci se compose des dispositifs en parts comme suivant : tambour moteur cylindrique (1) sur l'arbre (2) avec la courroie de commande (3) comme organe de commande de la poulie par moteur (4) du moteur de commande (4 A), le cas échéant, avec le rouleau profilé (27) et de la courroie transporteuse (5), qui sont supportés des stations à rouleaux et, le cas échéant, de l'arbre suspendu (6), où comme courroie de commande (3) une ou plusieurs courroies, telles que des courroies plates, des cordes, des courroies coniques ou des courroies de dent ou des roues dentées entraînent le tambour moteur (1) indirect ou direct, et que les courroies de commande (3) sont disposées sous la courroie transporteuse (5), ou ont effet seulement en partie sur une part débordant sur la courroie transporteuse (5) et en partie sur une part située au-dessous de la courroie transporteuse (5), et où la poulie par moteur (4) montre un diamètre plus petit que celui du tambour moteur (1), de préférence avec la proportion diamètre de la poulie par moteur (4) au diamètre du tambour moteur (1) comme 1 : jusqu'environ 10 à 20, et, le cas échéant, l'arbre suspendu (6) est construit avec la courroie de commande (3) et, le cas échéant, l'arbre suspendu (6) est entraîné par une poulie par moteur (4) prolongée avec deux courroies plates (18), et que le tambour moteur est entraîné du centre de l'arbre suspendu (6) avec la courroie de commande (3).

2. Installation de transport suivant la revendication 1, caractérisée en ce que la courroie de commande (3) est située sur le tambour moteur (1) avec une longueur embrassée plus grande que la courroie transporteuse (5), en dépendance du diamètre de la poulie par moteur (4) et de la distance de la poulie par moteur (4) du tambour moteur (1).

3. Installation de transport suivant les revendications 1 et 2, caractérisée en ce que la convexité du tambour moteur (1) est augmentée, en disposition d'une ou plusieurs courroies de commande (3) par des appuis de matière naturelle ou synthétique comme de la gomme, de la matière plastique ou du métal, entre ou latéral des courroies de commande (3), par des bandages « d » plats ou bombés pour élargir le diamètre, ou que la convexité est augmentée par une bombure synthétique au centre du tambour moteur (1) dans une telle largeur, que la marche entre les centres est renforcée et, le cas échéant, la courroie de commande (3) est construite bombée au centre.

4. Installation de transport suivant une ou plusieurs des revendications 1 à 3, caractérisée en ce que sur le tambour moteur (1) des courroies de commande coniques (28) sont construites comme unité avec une surface fermée pour augmenter la convexité, et que le tambour moteur (1) présente au centre une ou plusieurs rainures laminées ou fraisées pour l'installation des courroies, de préférence avec une telle profondeur, que les courroies coniques débordent sur le diamètre cylindrique du tambour moteur (1) pour effectuer la marche entre les centres de la courroie transporteuse (5), et qu'un ou plusieurs anneaux ou rondelles sont disposés dans le tambour moteur (1) à cette manière, que les rainures (22) se trouvent à côté et que le moteur de commande (4 A) est logé pivotant.

5. Installation de transport suivant une ou plusieurs des revendications 1 à 4, caractérisée en ce que le moteur (4 A) entraîne le tambour moteur (1) avec la poulie par moteur (4) à l'aide d'un tambour (29) pour la transmission des forces motrices plus grandes par démultiplications plus grandes, par changement des diamètres de la poulie par moteur (4) et du tambour (29), où entre la poulie par moteur (4) et tambour (29) ainsi qu'entre le tambour (29), et le tambour moteur (1) des courroies (30, 31) sont disposées pour la transmission des forces motrices, en particulier en disposant la courroie (30) centrique pour la marche entre les centres de la courroie (31), et pour la marche entre les centres de la courroie transporteuse (5) ou d'un élément de transport équivalent et, le cas échéant, la courroie (30) avec la poulie par moteur (4) et la rondelle (34) sont disposées, et qu'à la place de la poulie par moteur (4), le rouleau de commande (33) est connecté avec l'embrayage (32) avec deux ou multiples paliers.

6. Installation de transport suivant une ou plusieurs des revendications 1 à 5, caractérisée en ce que la courroie transporteuse (5) montre des dentures (5 A) et que le tambour moteur (1) a des dentures (1 A) et la commande du moteur (4 A), qui est, le cas échéant, un moteur à engrenages, agit sur la denture (5 A) du tambour moteur (1) par une ou plusieurs roues dentées (37, 38), ou le moteur (4 A) qui, le cas échéant, est un moteur à engrenages, agit sur le tambour moteur (1) par une courroie dentée ou chaîne (40), par dentures (41), ou le moteur (4 A), qui, le cas échéant, est un moteur à engrenages, agit sur la courroie dentée (42) à deux endroits et donc sur la courroie dentée (1 A) et donc sur le tambour moteur (1), et en même temps sur la courroie transporteuse (5) par la denture (5 A) et porte la courroie dentée (42) avec les appuis latéraux (43) pour le renforcement et pour une meilleure distribution des forces motrices et pour l'augmentation de la convexité.

7. Installation de transport suivant une ou plusieurs des revendications 1 à 6, caractérisée en ce qu'au-dessus de la courroie transporteuse (5) la plaine de transport sur la courroie transporteuse (5) est ajustée par des bandes d'acier (44), réglables latéral et par des traverses (45) réglables à l'altitude.

8. Installation de transport suivant une ou plusieurs des revendications 1 à 7, caractérisée en ce que la courroie (3) sur le tambour moteur cylindrique (1) est construite grosse, le cas échéant, avec des pièces intercalaires élastiques et avec une surface adhérente et avec bombure au centre pour obtenir la convexité, et agit sur la courroie transporteuse (5) qui, le cas échéant, consiste en gaze métallique (48) ou en bandes à maillons (49) pour la protection de la surface du tambour moteur (1) et de la face inférieure de la courroie transporteuse (5) et, le cas échéant, des profilés d'éclisse avec une auge en « U » (64) au bout au-devant de la direction du transport sont disposés à la courroie transporteuse (5), et les bandes d'acier (51), le cas échéant avec perforation (50), ou des plaques (52) sur gaze métallique (48) ou des bandes à maillons (49), sont vissées à fond et, le cas échéant, des profilés de toc (54) sont fixés avec des boulons (53), ou des profilés de toc (55) sont soudés à fond pour le transport sur un trajet élevant.

9. Installation de transport suivant une ou plusieurs des revendications 1 à 8, caractérisée en ce que les éléments de commande du tambour moteur cylindrique (1) sont disposés sur l'arbre (2) avec la courroie de commande (3) avec la poulie par moteur (4) et avec le moteur de commande (4 A), aussi ou seulement à la station de renvoi au bout arrière de l'installation de transport de telle manière, que sous disposition de part et d'autre des commandes avec entraînement supplémentaire au bout arrière de la station de renvoi, un tournage plus lentement entre 0,1 et 5 % de la vitesse de transport est ajusté, causant un entraînement tiré et raidi, ou que ces commandes de l'installation de transport sont réversibles, et sous cette disposition la commande tirée et raidie est ajustée du fait que les engrenages sont modifiés, ou la commande est mise en circuit dans un sens opposé électriquement ou électroni- quement.

10. Installation de transport suivant une ou plusieurs des revendications 1 à 9, caractérisée en ce que la courroie transporteuse (5) glisse dans une auge sur une couche d'air pressée par des tuyères et en conséquence les rouleaux et les stations de support sur le trajet de transport sont supprimés.

0 128 378

Figur 1

Figur 2

Figur 3

Figur 4

Figur 5 a

Figur 5 b

Figur 6

Figur 7

"d'"  "d"  5

1

2

6

19

3

18

18'  18

4

Figur 8

22

1

23  24

Figur 9

Figur 10

Figur 11

5

1

2

4 A

4

30

31

29

Figur 12

5

1

2

4 A

4

5

30

31

29

Figur 13

31

30

Figur 14

31

30

Figur 15

5
1
3
32
33
35
36
4 A

Figur 16

5
1
3
35
36
4 A
32
33

Figur 17

5
1
3
34
30
4
4A

Figur 18

5
1
3
34
30
4
4A

5

Figur 19

1A  5A  5

1

38

37

4A

Figur 20

5A

1

5

1A

38

4A

37

Figur 21

43  1A  5A  43  41  5

1

40

5

42

43

4A

39 A

39

42

39

4A

Figur 22

1

41

40

39

4A

4A

39

Figur 23

45

44

44

Figur 24

46

47

6

Figur 25

Figur 26

Figur 27

Figur 28